# EUROPEAN PATENT SPECIFICATION

(11) **EP 1 409 861 B1**
(45) Date of publication and mention of the grant of the patent: **27.02.2008**
(21) Application number: 02748993.9
(22) Date of filing: 01.07.2002
(51) Int. Cl.: F02B 53/00, F02B 41/00, F02B 75/36, F01C 1/22

(54) **ROTARY INTERNAL COMBUSTION ENGINE**
DREHKOLBENVERBRENNUNGSMOTOR
MOTEUR A COMBUSTION INTERNE ROTATIF

(30) Priority: 02.07.2001 GB 0116078
(43) Date of publication of application: 21.04.2004
(73) Proprietor: GALVIN, Georges Frederic, Sidcup, Kent DA15 7HG (GB)
(72) Inventor: GALVIN, Georges Frederic, Sidcup, Kent DA15 7HG (GB)
(74) Representative: Pratt, David Martin
(86) International application number: PCT/GB2002/003028
(87) International publication number: WO 2003/004842

(56) References cited:
- GB-A- 2 318 151
- US-A- 3 173 406
- US-A- 3 297 240
- US-A- 3 301 229
- US-A- 4 830 591
- US-A- 5 222 466

## Description

This invention relates to a rotary internal combustion engine.

A conventional internal combustion engine employs a crankshaft to convert the reciprocating motion of the piston(s) into output torque to propel a vehicle or act upon any other load. The crankshaft is inefficient in its ability to convert the power available from the fuel combustion into usable output torque. This is because combustion of the fuel/air mixture takes place a number of degrees before the top dead centre (TDC) position of the piston, dependent upon engine speed and load. The ignited fuel/air pressure forces cannot produce output torque when the piston is either before or at TDC as the connecting rod and the crank pin are producing reverse torque before TDC and practically in a straight line at TDC so that there is no force component tangential to the crank circle. This results in most of the available energy being lost as heat. If ignition takes place too early, most of the pressure generated is wasted trying to stop the engine (as this pressure tries to force the piston in the opposite direction to which it is travelling during the compression stroke); and, if left too late, the pressure is reduced due to the increasing volume above the piston as it starts its descent for the power stroke. The optimum maximum pressure point varies from engine to engine, but is around 12° after TDC on average.

My GB patent 2318151 relates to an internal combustion engine comprising a cylinder, a piston and connecting rod assembly, a rotary output shaft, means for igniting a fuel/air mixture in the cylinder, and means for actuating the ignition means. The piston and connecting rod assembly comprises a piston, a connecting rod, and a spring, the connecting rod having a first end operatively associated with the piston for movement therewith, and a second end connectible to a rotary output shaft. The spring acts between the piston and the connecting rod to bias the connecting rod away from the crown of the piston, and the piston is movable towards the second end of the connecting rod by a distance substantially equal to the cylinder clearance volume height. The actuating means is such that ignition takes place before the piston reaches TDC on the compression stroke, and the arrangement is such that the spring is compressed, by the expanding gases resulting from the combustion, following ignition, before the piston reaches TDC.

In use, ignition is timed, by conventional timing means to take place at a predetermined time before TDC, so that the expanding gases formed by the ignition combustion force the piston to descend rapidly within the cylinder during the power stroke. Prior to reaching TDC, however, the pressure in the cylinder will build up to a high value, and the piston is forced towards the crank pin, against the force of the springs, with respect to the carrier. This compresses the spring and increases the volume above the piston, causing a reduction in pressure and temperature in the cylinder. The lowered temperature reduces radiation losses and the heat lost to the cooling water and subsequently the exhaust, with the pressure being shared equally between the cylinder clearance volume and the spring. The energy stored in the spring is released when the piston has passed TDC, and leads to the production of output torque. This is achieved as the spring pressure is now combined with the cylinder pressure after TDC. A large proportion of this stored energy would otherwise have,been lost as heat, owing to the fact that the fuel/air mixture must be ignited before TDC, which is a result of the requirement for the ignited fuel/air to reach maximum pressure by about 12° after TDC for optimum performance.

The present invention relates to the use of a spring similar in action to that of GB 2318151 to increase the efficiency of a rotary internal combustion engine.

The present invention provides a rotary engine comprising a casing, an annular rotor rotatable within the casing, and an output shaft surrounded by the rotor, .the rotor being formed with an internal gear which meshes with an externally-toothed stationary gear fixed to the casing, wherein a cylindrical lobe is associated with, and eccentrically mounted relative to, the output shaft, and wherein the engine further comprises a spring which acts between the output shaft and the lobe.

The invention also provides a rotary engine comprising a casing, an annular rotor rotatable within the casing, an output shaft surrounded by the rotor, the rotor being formed with an internal gear which meshes with an externally-toothed stationary gear fixed to the casing, and a cylindrical lobe rotatably mounted within the rotor, the lobe being eccentrically mounted relative to the output shaft for limited rotation relative thereto, the rotor and the casing defining therebetween at least one combustion chamber, and wherein the engine further comprises a spring which acts between the output shaft and the lobe.

Preferably, the casing defines an internal epitrochoid chamber, and the rotor is generally triangular in configuration so as to define three combustion chambers within the epitrochoid chamber between itself and the casing. Advantageously, a seal is provided at each apex of the triangular rotor, the seals acting against the internal casing wall to seal the three combustion chambers. Conveniently, the stationary gear has two thirds of the number of teeth as the internal gear.

Advantageously, the casing is formed with adjacent inlet and outlet ports in a first wall thereof, and a spark pug is provided in an opposite wall of the casing, the spark plug being positioned so as to provide a spark, in use, within the epitrochoid chamber.

In a preferred embodiment, the arrangement is such that, following ignition, the spring is compressed thereby storing energy and causing the rotor to rotate in advance of the output shaft, the energy stored in the spring during compression being subsequently released to increase the output torque of the output shaft, and to permit the rotation of the output shaft to catch up with the rotation of the rotor.

Conveniently, the arrangement is such that the rotor can rotate in advance of the output shaft by substantially 44°. Thus, at the start of the power phase, the rotor can rotate forwardly relative to the output shaft by up to 44°, so that energy is efficiently passed to the spring rather than be lost as heat through the walls of the casing

Preferably, the spring is a corrugated compression spring, the opposite ends of which act against stops constituted by projections fixed respectively to the output shaft and the lobe. Alternatively, the spring is a leaf spring, one end of which is fixed to the output shaft, the other end of which is fixed to the lobe. In either case, the spring may be made of titanium.

Advantageously, the spring is rated so that the clearance volume of the engine is doubled at maximum load.

Preferably, the lobe is rotatably mounted within the rotor by means of a needle bearing.

The invention will now be described in greater detail, by way of example, with reference to the drawings, in which:-
Figure 1 is a perspective view, partially broken away of a conventional rotary internal combustion engine;
Figures 2a to 2d are schematic cross-sectional views of the engine of Figure 1 at the induction, compression, power and exhaust phases of the engine;
Figure 3 is a perspective view, partially broken away of a rotary internal combustion engine constructed in accordance with the invention; and
Figure 4 is a schematic perspective view of part of a modified form of the engine of Figure 3.

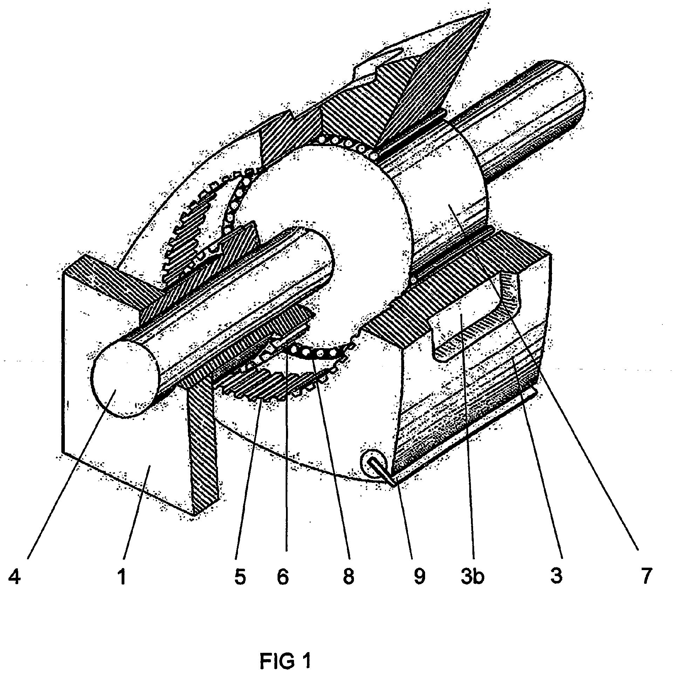

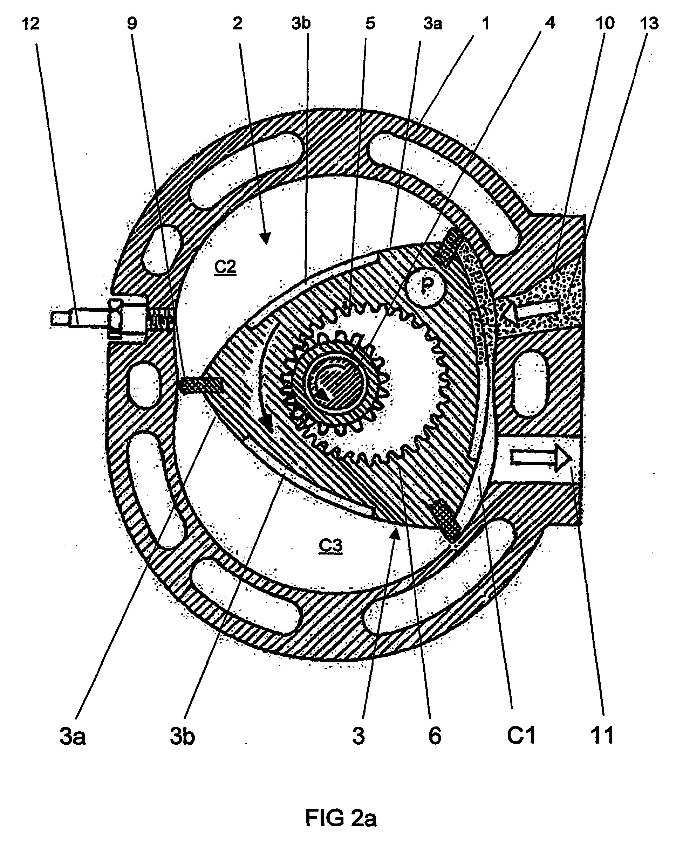

Referring to the drawings, Figures 1 and 2a show a conventional rotary internal combustion engine having a casing 1 defining an epitrochoid internal chamber 2 which houses a generally triangular rotor 3. The rotor 3 drives an output shaft 4, via an internal gear 5, a stationary gear 6 fixed to, or integral with, the casing 1, and an eccentric lobe 7 fixed to the output shaft. The lobe 7 is rotatably mounted within the rotor 3 by means of needle bearings 8. Thus, when the shaft 4 rotates, the rotor 3 wobbles in an orbit relative to the central axis of the shaft, in accordance with the position of the lobe 7. A7respective seal 9 is provided at each apex of the triangular rotor 3, the seals acting, in use against the internal walls of the casing to define three separate chambers C1, C2 and C3, each of which is defined by two of the seals, the rotor wall 3a between those seals and part of the internal casing wall. Each of these chambers C 1 to C3 rotates together with its associated rotor wall 3a. A respective combustion chamber 3b is provided within each of the rotor walls 3a. The casing 1 is provided with inlet and outlet ports 10 and 11 respectively, and with a spark plug 12, the spark plug being positioned in the casing wall that is opposite to the casing wall containing the inlet and outlet ports.

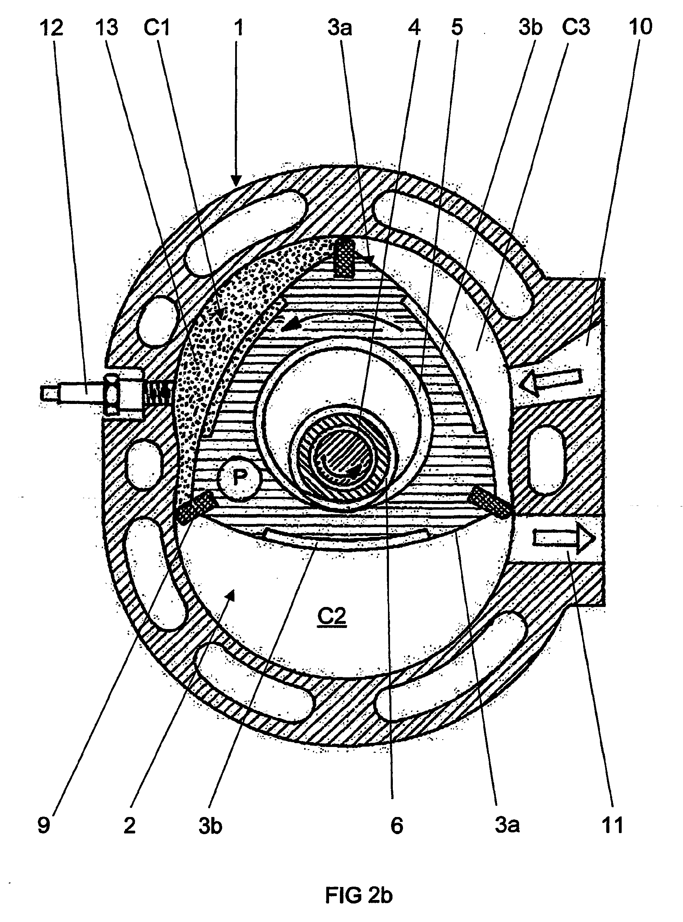

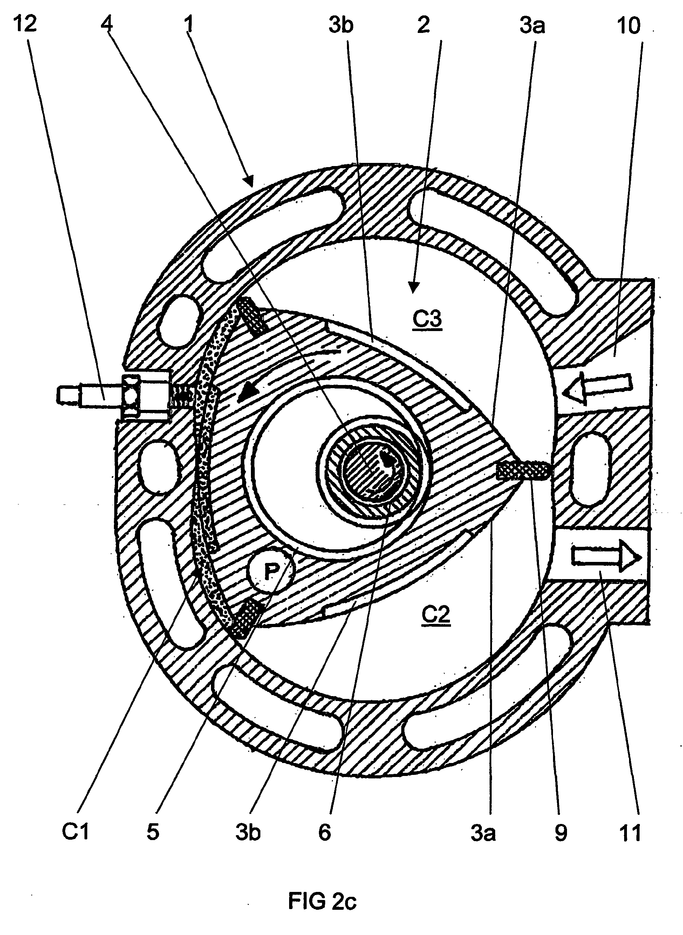

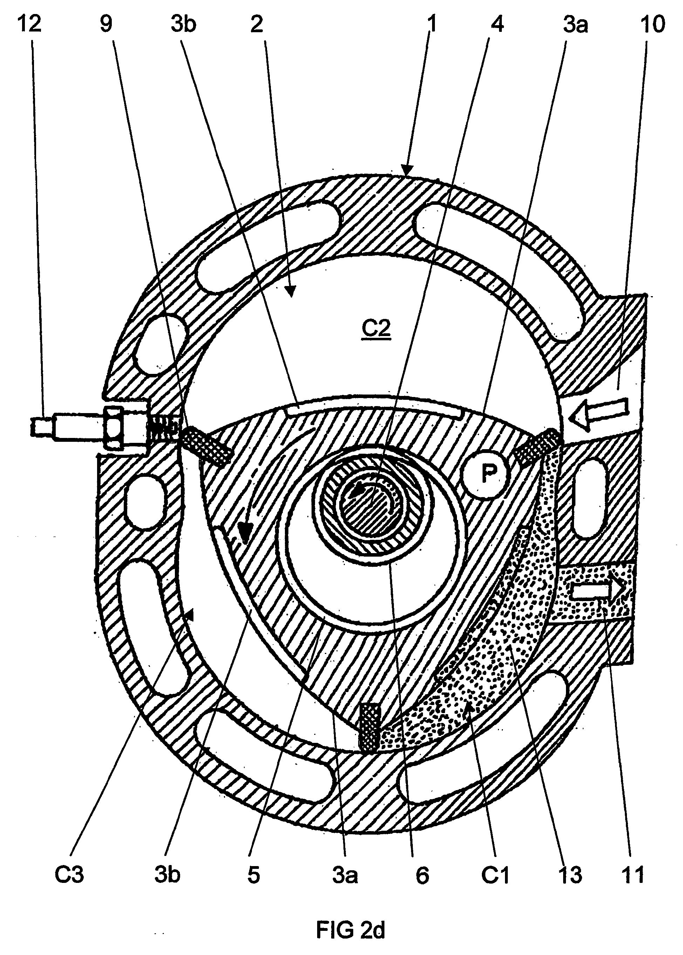

Figure 2a shows the engine at the commencement of the induction phase (equivalent to the induction stroke of a conventional four-stroke piston engine), when a fuel and air mixture 13 is drawn into the adjacent internal chamber C1. After the trailing seal associated with the chamber C 1 passes over the inlet port 10, the compression phase commences (see Figure 2b), in which the fuel air mixture in the chamber is compressed into the associated combustion chamber 3b, until (as shown in Figure 2c) the spark plug 12 sparks to ignite the fuel/air mixture and initiate the power phase. Finally, as shown in Figure 2d, the chamber C 1 passes over the outlet port 11 in the exhaust phase. As the shaft 4 rotates, the internal gear 5 rolls around the stationary gear 6, so that the rotor 3 is compelled to rotate, and to orbit in a path determined by the off set of the eccentric lobe 7. The lobe 7 thus acts like the crankshaft of a conventional piston engine so that, as the rotor 3 follows its path round within the casing 1, it pushes on the lobe. Since the lobe 7 is mounted eccentrically with respect to the shaft 4, the force that the rotor 3 applies to the lobe creates torque in the shaft, causing it to rotate. In effect, this will provide a smooth predetermined wobble at a definite speed relative to the shaft 4.

Each of the three internal chambers C 1 to C3 operates in this manner so that the induction phase for the chamber following that just described commences as soon as that chamber is in communication with the inlet port 10. The stationary gear 6 has two thirds of the number of teeth as the internal gear 5, so that the output shaft 4 rotates at three times the speed of the rotor 3.

It will be apparent, from Figure 2c, that, at the start of the power phase, the resultant forces on the rotor wall 3a produce zero torque (this position being equivalent to TDC for a conventional piston engine) with the turning moment increasing as the pressure reduces owing to rotation of the rotor 3. Considerable energy is, therefore, lost as heat during this period, this energy loss being similar to that lost in a conventional piston engine; that is to say approximately 30% is lost as heat through the walls and 30% to the exhaust.

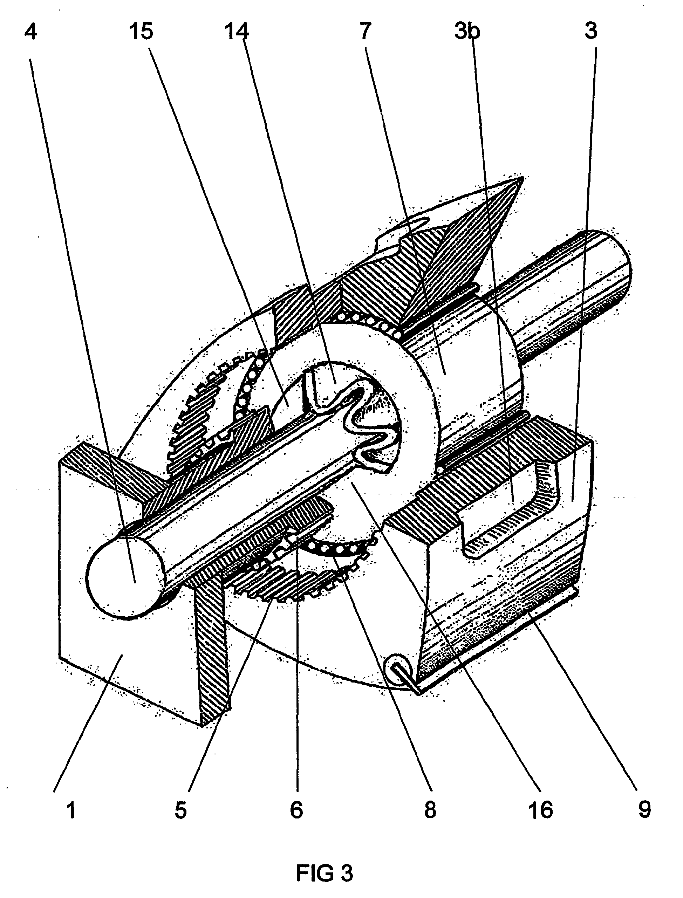

Figure 3 shows the engine of Figure 1 and 2 modified in accordance with the invention. Like parts will, therefore, be used for like parts, and only the modifications will be described in detail. The principle modification is that the lobe 7 is not fixed to the shaft 4, but is held for limited rotation relative thereto by a spring 14 positioned within the lobe and acting between a projection 15 fixed to the shaft 4 and a projection 16 attached to the lobe. The projections 15 and 16 are positioned such that the rotor 3 can rotate substantially 44° relative to the shaft 4, this angle being dependent upon the particular engine design. This, combined with the correct choice of spring rating, ensures that the clearance volume is doubled at maximum load. The clearance volume is the minimum volume attainable within the engine, and occurs at the zero torque position (this position being equivalent, as mentioned above, to TDC for a conventional piston engine). The angle of relative rotation depends upon the compression ratio which, in this case, is 9.5:1.

Assuming, as shown in Figure 2c, that the rotor 3, the lobe 7 and the shaft 4 are rotating in an anticlockwise direction, then it can be seen that, pressure on the rotor 3 just after "TDC"(the post ignition pressure), will cause the spring 14 to compress, thereby allowing the rotor and the lobe 7 to rotate anticlockwise with respect to the shaft 4 up to a maximum of approximately 44°, this angle being dependent upon the particular engine design. The spring 14 begins to compress prior to ignition under slight compression resulting from a reduction in the volume of the associated chamber C1 as it moves from the position shown in Figure 2b to the ignition position shown in Figure 2c. After ignition, assuming full load conditions, the rate of spring compression accelerates as the pressure in the chamber C1 rapidly increases, and this continues until the spring 14 is fully compressed. Thus, following ignition, the energy of the burning fuel/air mixture is partially transferred to the spring 14 to compress it, this energy being stored in the spring instead of being lost as heat through the engine walls. This causes the rotor 3 to rotate anticlockwise by up to approximately 44° relative to the shaft 4. The pressure and temperature in the combustion chamber 3b will fall accordingly, as energy is transferred to the spring 14. The rotor 3 will, therefore, rotate in advance of the position it would take for a conventional rotary engine of the type shown in Figures 1 and 2, but will return to its conventional position relative to the shaft 4 at the end of the power phase as the spring 14 decompresses (expands). During this spring expansion, energy previously stored in the spring is released, thereby increasing the output torque of the shaft 4 when the moment arm is at or about a maximum. In this way, an increase in efficiency of up to 30% ensues.

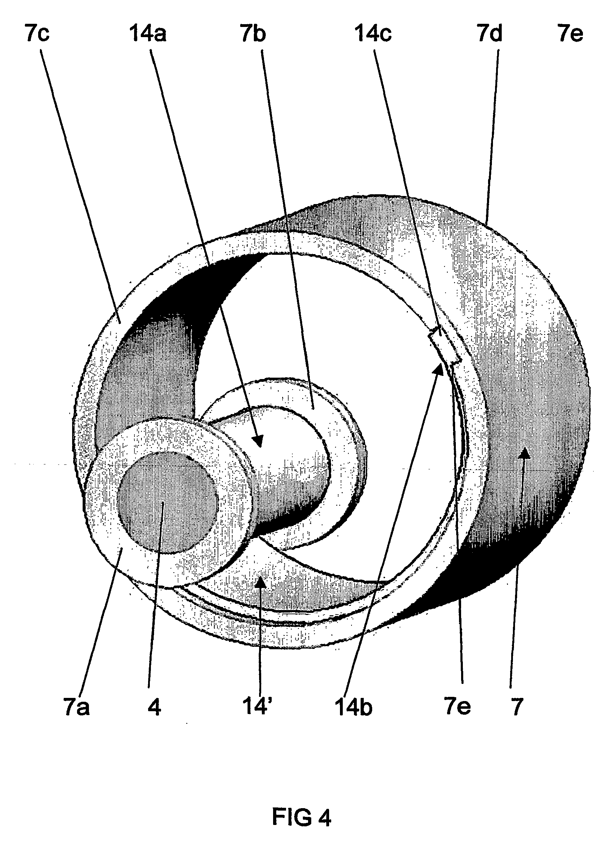

Figure 4 is a schematic perspective view of part of a modified form of the engine of Figure 3, so like reference numerals will be used for like parts, and only the modifications will be described in detail. Figure 4 shows only the lobe 7, the shaft 4, and a modified form of spring 14', the other parts of the engine not being shown for reasons of simplicity. The shaft 4 is rotatably mounted within annular bearing plates 7a and 7b which are integrally formed with the annular end faces 7c and 7d of the lobe 7. The spring 14' is a leaf spring, one end 14a of which partially wraps round, and is fixed to, the shaft 4, the other end 14b of the spring being formed with a projection 14c which is a friction fit within a complementary recess 7e formed in the internal wall of the lobe 7. The spring 14' is sized and shaped to permit the rotor 3 to rotate anticlockwise relative to the shaft 4 by approximately 44°. As with the engine of Figure 3, however, this degree of relative rotation depends upon the particular engine design. It is chosen, as for the engine of Figure 3, to ensure that the clearance volume is substantially doubled at maximum load. The engine of Figure 4 operates in the same way as that of Figure 3.

The springs 14 and 14' can be of any appropriate design to achieve the desired result, and may be made of any suitable material, such as titanium.

## Claims

1. A rotary engine comprising a casing, an annular rotor rotatable within the casing, an output shaft surrounded by the rotor, the rotor being formed with an internal gear which meshes with an externally-toothed stationary gear fixed to the casing, and a cylindrical lobe rotatably mounted within the rotor, the lobe being eccentrically mounted relative to the output shaft for limited rotation relative thereto, the rotor and the casing defining therebetween at least one combustion chamber, and wherein the engine further comprises a spring which acts between the output shaft and the lobe.

2. An engine as claimed in claim 1, wherein the casing defines an internal epitrochoid chamber, and the rotor is generally triangular in configuration so as to define three combustion chambers within the epitrochoid chamber between itself and the casing.

3. An engine as claimed in claim 2, wherein a seal is provided at each apex of the triangular rotor, the seals acting against the internal casing wall to seal the three combustion chambers.

4. An engine as claimed in claim 3, wherein the stationary gear has two thirds of the number of teeth as the internal gear.

5. An engine as claimed in any one of claims 2 to 4, wherein the casing is formed with adjacent inlet and outlet ports in a first wall thereof, and a spark pug is provided in an opposite wall of the casing, the spark plug being positioned so as to provide a spark, in use, within the epitrochoid chamber.

6. An engine as claimed in any one of claims 1 to 5, wherein the arrangement is such that, following ignition, the spring is compressed thereby storing energy and causing the rotor to rotate in advance of the output shaft, the energy stored in the spring during compression being subsequently released to increase the output torque of the output shaft, and to permit the rotation of the output shaft to catch up with the rotation of the rotor.

7. An engine as claimed in claim 6, wherein the arrangement is such that the rotor can rotate in advance of the output shaft by substantially 44°.

8. An engine as claimed in any one of claims 1 to 7, wherein the spring is a corrugated compression spring, the opposite ends of which act against stops constituted by projections fixed respectively to the output shaft and the lobe.

9. An engine as claimed in any one of claims 1 to 7, wherein the spring is a leaf spring, one end of which is fixed to the output shaft, the other end of which is fixed to the lobe.

10. An engine as claimed in any one of claims 1 to 9, wherein the spring is rated so that the clearance volume of the engine is doubled at maximum load.

11. An engine as claimed in any one of claims 1 to 10, wherein the spring is made of titanium.

12. An engine as claimed in any one of claims 1 to 11, wherein the lobe is rotatably mounted within the rotor by means of a needle bearing.

## Patentansprüche

1. Drehkolbenmotor, der ein Gehäuse, einen ringförmigen Rotor, der im Gehäuse drehbar ist, eine Hauptwelle, die durch den Rotor umgeben ist, wobei der Rotor mit einem Hohlrad ausgebildet ist, das mit einen außenverzahnten feststehenden Zahnrad ineinandergreift, das am Gehäuse befestigt ist, und einen zylindrischen Nocken umfaßt, der drehbar im Rotor angebracht ist, wobei der Nocken relativ zur Hauptwelle für eine begrenzte Rotation relativ dazu exzentrisch angebracht ist, wobei der Rotor und das Gehäuse dazwischen mindestens eine Verbrennungskammer definieren, und wobei der Motor ferner eine Feder umfaßt, die zwischen der Hauptwelle und dem Nocken wirkt.

2. Motor nach Anspruch 1, wobei das Gehäuse eine innere Epitrochoidenkammer definiert, und der Rotor in seiner Gestaltung im allgemeinen dreieckig ist, um zwischen sich selbst und dem Gehäuse drei Verbrennungskammern in der Epitrochoidenkammer zu definieren.

3. Motor nach Anspruch 2, wobei an jedem Scheitelpunkt des dreieckigen Rotors eine Dichtung vorgesehen ist, die gegen die innere Gehäusewand abdichtet, um die drei Verbrennungskammern abzudichten.

4. Motor nach Anspruch 3, wobei das feststehende Zahnrad zwei Drittel der Anzahl der Zähne des Hohlrads aufweist.

5. Motor nach einem der Ansprüche 2 bis 4, wobei das Gehäuse in einer ersten Wand davon mit benachbarten Einlaß- und Auslaßöffnungen ausgebildet ist, und eine Zündkerze in einer gegenüberliegenden Wand des Gehäuses vorgesehen ist, wobei die Zündkerze so angeordnet ist, daß sie im Gebrauch einen Zündfunken in der Epitrochoidenkammer bereitstellt.

6. Motor nach einem der Ansprüche 1 bis 5, wobei die Anordnung so gestaltet ist, daß anschließend an eine Zündung die Feder zusammengedrückt wird, wodurch Energie gespeichert wird und bewirkt wird, daß sich der Rotor vor der Hauptwelle dreht, wobei die in der Feder während des Zusammendrückens gespeicherte Energie anschließend freigesetzt wird, um das Ausgangsdrehmoment der Hauptwelle zu erhöhen, und um es zu ermöglichen, daß die Rotation der Hauptwelle die Rotation des Rotors einholt.

7. Motor nach Anspruch 6, wobei die Anordnung so gestaltet ist, daß sich der Rotor im wesentlichen um 44° vor der Hauptwelle drehen kann.

8. Motor nach einem der Ansprüche 1 bis 7, wobei die Feder eine gewellte Druckfeder ist, deren entgegengesetzte Enden gegen Anschläge wirken, die durch Vorsprünge gebildet werden, die jeweils an der Hauptwelle und dem Nocken befestigt sind.

9. Motor nach einem der Ansprüche 1 bis 7, wobei die Feder eine Blattfeder ist, deren eines Ende an der Hauptwelle befestigt ist, deren anderes Ende am Nocken befestigt ist.

10. Motor nach einem der Ansprüche 1 bis 9, wobei die Feder so bemessen ist, daß der Totraum des Motors bei maximaler Belastung verdoppelt wird.

11. Motor nach einem der Ansprüche 1 bis 10, wobei die Feder aus Titan hergestellt ist.

12. Motor nach einem der Ansprüche 1 bis 11, wobei der Nocken mittels eines Nadellagers drehbar im Rotor angebracht ist.

## Revendications

1. Moteur à piston rotatif comprenant un carter moteur, un rotor annulaire tournant à l'intérieur du carter moteur, un arbre de sortie entouré par le rotor, le rotor étant lui-même constitué d'un engrenage interne qui s'engrène dans un engrenage fixe à denture extérieure fixé sur le carter moteur, et d'un lobe cylindrique monté en rotation dans le rotor, le lobe étant monté de manière excentrique par rapport à l'arbre de sortie afin de permettre une rotation relative limitée entre le lobe et l'arbre, le rotor et le carter moteur définissant au minimum une chambre de combustion entre eux, et dans lequel le moteur comprend en outre un ressort qui agit entre l'arbre de sortie et le lobe.

2. Moteur selon la revendication 1, dans lequel le carter moteur définit une chambre interne épitrochoïde, et le rotor est généralement de configuration triangulaire, délimitant ainsi dans la chambre épitrochoïde trois chambres de combustion entre le rotor et le carter moteur.

3. Moteur, selon la revendication 2, dans lequel un joint d'étanchéité est prévu à chaque apex du rotor triangulaire, les joints d'étanchéité agissant contre la paroi interne du carter moteur afin d'assurer l'étanchéité des trois chambres de combustion.

4. Moteur selon la revendication 3, dans lequel le nombre de dents de l'engrenage fixe correspond aux deux tiers du nombre de dents de l'engrenage interne.

5. Moteur selon l'une quelconque des revendications 2 à 4, dans lequel le carter moteur est constitué d'orifices d'admission et d'échappement agencés dans une première paroi du carter moteur, et où une bougie d'allumage, prévue dans une paroi opposée du carter moteur est positionnée de manière à produire, en cours de fonctionnement, une étincelle d'allumage à l'intérieur de la chambre épitrochoïde.

6. Moteur selon l'une quelconque des revendications 1 à 5, agencé de manière à produire, après allumage, une compression du ressort , stockant en conséquence l'énergie et permettant au rotor de prendre des tours d'avance sur l'arbre de sortie, l'énergie stockée dans le ressort pendant la compression étant ensuite libérée pour augmenter le couple de sortie de l'arbre de sortie et permettre à ce dernier de rattraper les tours du rotor.

7. Moteur selon la revendication 6, agencé de manière à permettre une rotation substantielle de 44 degrés du rotor, en avance de l'arbre de sortie.

8. Moteur selon l'une quelconque des revendications 1 à 7, dans lequel le ressort est un ressort de compression ondulé, dont les extrémités opposées agissent contre des butées respectivement constituées par des projections fixes sur l'arbre de sortie et sur le lobe.

9. Moteur selon l'une quelconque des revendications 1 à 7, dans lequel le ressort est un ressort à lames, dont l'une des extrémités est fixée à l'arbre de sortie et l'autre est fixée au lobe.

10. Moteur selon l'une quelconque des revendications 1 à 9, dans lequel le ressort est dimensionné de manière à doubler l'espace mort du moteur, à charge maximale.

11. Moteur selon l'une quelconque des revendications 1 à 10, dans lequel le ressort est fabriqué en titane.

12. Moteur selon l'une quelconque des revendications 1 à 11, dans lequel le lobe est monté en rotation à l'intérieur du rotor, au moyen d'un roulement à aiguilles.
